# EUROPÄISCHE PATENTSCHRIFT

(11) **EP 3 272 594 B1**
(45) Veröffentlichungstag und Bekanntmachung des Hinweises auf die Patenterteilung: **22.04.2020**
(21) Anmeldenummer: 17180802.5
(22) Anmeldetag: 11.07.2017
(51) Int. Cl.: B60R 25/09, B60R 25/21, B60T 3/00, G07C 9/00

(54) **KRAFTFAHRZEUG MIT EINEM RADUNTERLEGKEIL UND EINER HALTERUNG FÜR DEN RADUNTERLEGKEIL**
MOTOR VEHICLE WITH A WHEEL CHOCK AND A SUPPORT FOR THE WHEEL CHOCK
VÉHICULE AUTOMOBILE COMPRENANT UNE CALE DE ROUE ET UN DISPOSITIF DE MAINTIEN DE CALE DE ROUE

(30) Priorität: 23.07.2016 DE 102016008962
(43) Veröffentlichungstag der Anmeldung: 24.01.2018
(73) Patentinhaber: MAN Truck & Bus SE, 80995 München (DE)
(72) Erfinder: Gerusel, Karsten, 80689 München (DE)
(74) Vertreter: v. Bezold & Partner Patentanwälte - PartG mbB

(56) Entgegenhaltungen:
- EP-A2- 2 397 392
- EP-A2- 2 957 484
- DE-A1- 10 209 162
- GB-A- 2 410 776
- US-A1- 2008 185 238
- US-A1- 2009 045 236

## Beschreibung

Die Erfindung betrifft ein Kraftfahrzeug, insbesondere ein Nutzfahrzeug, mit einem Radunterlegkeil und einer Halterung für den Radunterlegkeil, in der der Radunterlegkeil abnehmbar halterbar ist.

Radunterlegkeile können abgestellte Kraftfahrzeuge einschließlich Anhänger durch Blockieren mindestens eines Rades gegen Wegrollen sichern. Üblicherweise werden Radunterlegkeile, nachfolgend auch als Unterlegkeile bezeichnet, als lose Einzelteile in einer Halterung mitgeführt, wobei die Halterung z. B. am Fahrgestellrahmen des Nutzfahrzeugs angeordnet sein kann. Die Halterung kann sich für unterschiedliche Nutzfahrzeuge an unterschiedlichen Einbauorten am Rahmen befinden, abhängig von Größe und Ausstattung der Fahrzeuge und je nachdem, wo jeweils Fahrzeugtyp-spezifisch ausreichend Platz zur Anbringung des Radunterlegkeils ist. In der DE 102 09 162 A1 wird beispielsweise vorgeschlagen, eine Außenflanke eines Längsträgers von Sattelanhänger-Fahrgestellrahmen, insbesondere deren Kröpfungsbereich, als Anbringungsort für einen Radunterlegkeil zu verwenden. Ferner ist aus der DE 10 2010 024 409 A1 ein gattungsgemäßer Kotflügel für ein Nutzfahrzeug bekannt, an dessen Außenseite der Kotflügelwölbung ein zur Aufnahme eines Unterlegkeils bestimmter Stauraum mit einer Öffnung angeordnet ist. Die Anbringung des Unterlegkeils in direkter Nähe des Reifens erleichtert die Handhabung für den Fahrer.

Nutzfahrzeuge müssen insbesondere am Hang bergab mit mindestens einem Radunterlegkeil gesichert werden. Ein aus der Praxis bekanntes Problem ist jedoch, dass der Unterlegkeil leicht vergessen werden kann, wenn das Fahrzeug bergauf wegfährt, weil Rollsperren oder ähnliche Funktionen des Kraftfahrzeugs das Zurückrollen verhindern.

In der Offenlegungsschrift US 2009/0045236 A1 wird daher vorgeschlagen, eine Halterung für den Radunterlegkeil so auszuführen, dass beim Entnehmen des Radunterlegkeils aus der Halterung ein visueller Indikator ausgeklappt wird, der z. B. eine hell gefärbte Fahne aufweist. Der visuelle Indikator dient als Warn- bzw. Erinnerungshinweis für den Fahrer, nicht ohne den Radunterlegkeil wegzufahren.

Durch den ausgeklappten Indikator wird die jedoch zulässige Breite für Fahrzeuge überschritten, wodurch diese Anwendung nicht auf öffentlichen Straßen in Europa möglich ist. Ein weiterer Nachteil dieses Ansatzes ist, dass ein derartig rein visueller Indikator dennoch oftmals vom Fahrer beim Wegfahren übersehen werden kann.

Es ist somit eine Aufgabe der Erfindung, einen verbesserten Ansatz bereitzustellen, mit dem Nachteile herkömmlicher Techniken vermieden werden können. Die Aufgabe der Erfindung ist es insbesondere, eine verbesserte Möglichkeit bereitzustellen, die zuverlässig verhindert, dass ein am Rad zur Sicherung angeordneter Radunterlegkeil dort beim Wegfahren vergessen wird.

Diese Aufgaben werden durch ein Kraftfahrzeug mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird ein Kraftfahrzeug bereitgestellt, umfassend einen Radunterlegkeil und eine Halterung für den Radunterlegkeil, in der der Radunterlegkeil abnehmbar halterbar ist. Das Kraftfahrzeug umfasst ferner eine Wegfahrsperre des Kraftfahrzeugs, die aktiviert ist, wenn der Radunterlegkeil aus der Halterung entnommen ist und die deaktiviert ist, wenn der Radunterlegkeil sich in der Halterung befindet. Die Wegfahrsperre ist hierbei eine Vorrichtung, die im aktivierten Zustand einen Fahrbetrieb, insbesondere ein Los- bzw. Wegfahren des Kraftfahrzeugs verhindert.

Aus dem Stand der Technik sind an sich verschiedenste Arten von Wegfahrsperren bekannt. Es wird betont, dass die im Zusammenhang mit der Erfindung verwendete Wegfahrsperre nicht auf eine bestimmte Art von Wegfahrsperre beschränkt ist, sondern dass prinzipiell jede zweckmäßig eingerichtete Art von Wegfahrsperre verwendet werden kann, solange diese aktiviert ist, d. h. eingeschaltet ist, wenn der Radunterlegkeil aus der Halterung entnommen ist bzw. nicht in dieser vorhanden ist und deaktiviert ist, d. h. ausgeschaltet ist, wenn der Radunterlegkeil sich in der Halterung befindet. Die Wegfahrsperre kann beispielsweise als elektronische Wegfahrsperre oder als mechanische Wegfahrsperre ausgeführt sein. Das Kraftfahrzeug ist insbesondere ein Nutzfahrzeug, beispielsweise ein Lastkraftwagen oder Omnibus, und kann ferner auch als Zugfahrzeug mit einem Anhänger ausgeführt sein.

Der Grundgedanke der Erfindung besteht somit darin, zu erfassen, ob der Radunterlegkeil sich in seiner Halterung befindet oder nicht und wenn er sich nicht in seiner Halterung befindet, eine Wegfahrsperrfunktion des Kraftfahrzeugs zu aktivieren, so dass ein Los- bzw. Wegfahren des Kraftfahrzeugs bei aktivierter Wegfahrsperre nicht möglich ist. Dies bietet den besonderen Vorzug, dass der Fahrer nicht einfach wegfahren kann, wenn er vergessen hat, einen am Rad angebrachten Radunterlegkeil vor der Wiederaufnahme einer Fahrt wieder in der Halterung zu verstauen.

Gemäß einer besonders bevorzugten Ausführungsform sind ferner Überbrückungsmittel vorgesehen, mittels derer eine aktivierte Wegfahrsperre deaktivierbar ist, ohne dass sich der Unterlegkeil in der Halterung befindet. Mit einem derartigen Überbrückungsmittel kann somit eine aufgrund eines nicht in der Halterung befindlichen Radunterlegkeils aktivierte Wegfahrsperre bewusst dennoch deaktiviert werden. Dies bietet den Vorteil, dass z. B. im Falle eines Diebstahls des Radunterlegkeils das Fahrzeug dennoch betriebsfähig ist und auf diese Weise ungewollte sogenannte "Liegenbleiber" verhindert werden.

Die Überbrückungsmittel können auf verschiedenste Arten ausgeführt sein, beispielsweise in Abhängigkeit von der Ausführung der Wegfahrsperre oder in Abhängigkeit davon, wie erkannt wird, ob sich der Radunterlegkeil in der Halterung befindet. Eine einfache Variante wäre beispielsweise ein sogenannter Blindkeil, der die gleiche Form und Größe wie der Radunterlegkeil hat, und der bei Bedarf in die Halterung gesteckt werden kann. Bei einer elektronischen Wegfahrsperre kann das Überbrückungsmittel auch entsprechend programmtechnisch als Überbrückungsfunktion implementiert werden, die dem Fahrer beispielsweise im Cockpit zur Auswahl angezeigt wird. So kann der Fahrer bei Bedarf durch Auswahl einer entsprechenden Überbrückungsfunktion im Cockpit bewusst eine aktivierte Wegfahrsperre wieder deaktivieren, auch wenn kein Radunterlegkeil in der Halterung ist.

Gemäß der Erfindung ist die Wegfahrsperre derart ausgebildet, dass bei aktivierter Wegfahrsperre eine Zündung und/oder ein Motorstart durchführbar sind und/oder eine elektrische Stromversorgung des Kraftfahrzeuges einschaltbar ist, jedoch ein Losfahren des Kraftfahrzeugs nicht möglich ist. Dies bietet insbesondere bei einem Nutzfahrzeug den Vorteil, dass bereits ein Fahrbetrieb vorbereitet werden kann, z. B. um die Druckluftanlage für den Betrieb einer Druckluftbremse zu füllen, auch wenn das Kraftfahrzeug noch nicht losfahren kann. Beispielsweise kann bei aktivierter Wegfahrsperre eine Fahrstufe eines automatisierten Getriebes des Kraftfahrzeugs nicht einlegbar sein, z. B. können die Fahrstufen ("D", "Ds", "Dm", "R" etc.) eines Kraftfahrzeugs mit Automatikgetriebe oder automatisiertem Getriebe bei aktivierter Wegfahrsperre nicht freigegeben sein.

Gemäß einem weiteren Gesichtspunkt der Erfindung kann das Kraftfahrzeug ein Detektionsmittel aufweisen, das ausgebildet ist, zu erkennen, ob sich der Radunterlegkeil in der Halterung befindet oder nicht und das ferner ausgebildet ist, die Wegfahrsperre mittelbar oder unmittelbar zu aktivieren, wenn sich der Radunterlegkeil nicht in der Halterung befindet und die Wegfahrsperre zu deaktivieren, wenn sich der Radunterlegkeil in der Halterung befindet.

Eine Möglichkeit der erfindungsgemäßen Realisierung, insbesondere des Detektionsmittels, sieht hierbei vor, dass die Halterung einen durch den Radunterlegkeil auslösbaren Kontakt oder Schalter aufweist, über den die Wegfahrsperre aktivierbar oder deaktivierbar ist. Mit anderen Worten ist der Kontakt oder der Schalter so im Bereich der Halterung angeordnet, dass wenn der Radunterlegkeil wieder in der Halterung ordnungsgemäß angeordnet wird, automatisch auch der Kontakt oder der Schalter betätigt wird. Auf diese Weise kann auf konstruktiv einfache Weise automatisch erkannt werden, ob sich der Radunterlegkeil in der Halterung befindet oder nicht. Der Schalter oder Kontakt steht hierbei mit der Wegfahrsperre in Wirkverbindung, derart, dass durch einen Zustand des Schalters oder Kontakts, der sich ergibt, wenn sich der Radunterlegkeil nicht in der Halterung befindet, die Wegfahrsperre aktiviert wird und dass durch einen Zustand des Schalters oder Kontakts, der sich ergibt, wenn sich der Radunterlegkeil in der Halterung befindet, die Wegfahrsperre deaktiviert wird.

Beispielsweise kann somit über den Kontakt oder Schalter auch ein elektrisches Signal erzeugt werden, mittels dessen eine Wegfahrsperre aktivierbar oder deaktivierbar ist.

Falls das Kraftfahrzeug über eine elektrische, pneumatische oder elektro-pneumatische Feststellbremse verfügt, kann die Feststellbremse als Wegfahrsperre verwendet werden und zusammen mit dem an der Radunterlegkeilhalterung angeordneten Kontakt oder Schalter beispielsweise so ausgebildet sein, dass über den Schalter oder Kontakt ein elektrisches Signal erzeugbar ist, das ein Einlegen der entsprechenden Feststellbremsfunktion auslöst, falls der Unterlegkeil nicht in der Halterung ist und das das Signal wieder deaktiviert, falls der Radunterlegkeil sich in der Halterung befindet.

Beispielsweise kann der Schalter mit einem Ventil, beispielsweise einem Magnetventil, der elektropneumatischen oder pneumatischen Feststellbremse in Wirkverbindung stehen, derart, dass ein Zustand des Schalters oder Kontakts, der sich ergibt, wenn sich der Radunterlegkeil nicht in der Halterung befindet (z. B. ein nichtausgelöster Kontakt oder nichtbetätigter Schalter) eine Ventilstellung des Ventils erzeugt, in der die Feststellbremse eingelegt ist.

Ferner erzeugt ein Zustand des Schalters oder Kontakts, der sich ergibt, wenn sich der Radunterlegkeil in der Halterung befindet (z. B. ein ausgelöster Kontakt oder ein betätigter Schalter), eine Ventilstellung des Ventils, bei der die Feststellbremse nicht eingelegt ist.

Bei einer rein pneumatisch betätigbaren Feststellbremse kann der Schalter auch direkt mechanisch mit einem Ventil der Feststellbremse in Wirkverbindung stehen.

Es ist zu erwähnen, dass es natürlich ferner möglich ist, dass zum Ein- und Auslegen der Feststellbremse das Ventil, beispielsweise in Form eines Magnetventils, auch unabhängig von dem Schalter oder Kontakt separat ansteuerbar ist oder dass die Feststellbremse mittels weiterer Ventilvorrichtungen eingelegt oder ausgelegt werden kann, so dass der Kontakt oder Schalter an der Halterung des Radunterlegkeils nur eine zusätzliche Bedienmöglichkeit für die pneumatische Feststellbremse darstellt.

Auf diese Weise kann eine einfach zu realisierende Wegfahrsperrfunktionalität realisiert werden, die ausgelöst wird, wenn sich der Radunterlegkeil nicht in der Halterung befindet. Ein besonderer Vorteil ist, dass eine bestehende Bremsfunktionalität des Kraftfahrzeugs (hier der Feststellbremse) benutzt wird, um die Wegfahrsperrfunktionalität im Zusammenhang mit dem Radunterlegkeil zu realisieren.

Es ist besonders vorteilhaft, wenn der von dem Radunterlegkeil in der Halterung betätigbare Schalter als Druck- und/oder Rollenschalter ausgeführt ist, der so an der Halterung angeordnet ist, dass der Druck- und/oder Rollenschalter in einem betätigten Zustand ist, wenn der Radunterlegkeil sich in der Halterung befindet und in einem nichtbetätigten Zustand ist, wenn der Radunterlegkeil sich nicht in der Halterung befindet. Der betätigte Zustand des Schalters kann auch als ausgelöster Zustand des Schalters und der nichtbetätigte Zustand als nicht ausgelöster Zustand des Schalters bezeichnet werden. Ein derartiger Druck- und/oder Rollenschalter ermöglicht eine mechanisch robuste Lösung, um ein erfindungsgemäßes Detektionsmittel zu realisieren, mittels dessen das Vorhandensein oder Nichtvorhandensein des Radunterlegkeils in der Halterung erkannt und entsprechend eine Wegfahrsperrfunktion aktiviert oder deaktiviert werden kann.

Es sind jedoch unterschiedlichste Ausführungsvarianten denkbar, um ein erfindungsgemäßes Detektionsmittel zu realisieren. Das Detektionsmittel kann insbesondere Übertragungsmittel zur kontaktlosen Daten- und/oder Energieübertragung aufweisen, mit deren Hilfe ein Signal, z. B. ein optisches oder elektrisches Signal, durch kontaktlose Übertragung, z. B. durch induktive Übertragung, zwischen dem Radunterlegkeil und der Halterung übertragen werden kann. Das Detektionsmittel kann ferner so ausgebildet sein, dass es, falls der Radunterlegkeil nicht in seiner Halterung ist, ein Signal, z. B. ein kodiertes Signal, über den Fahrzeug-CAN sendet, um einen Eingriff in die Getriebe-Steuerung zu aktivieren, um eine Wegfahrsperrfunktionalität auszulösen.

Beispielsweise kann das Detektionsmittel eine auf dem Radunterlegkeil angeordnete Markierung aufweisen, beispielsweise in Form eines Etiketts. Das Etikett kann beispielsweise ein sogenanntes RFID-Etikett sein (englisch: Radio-Frequency-Identification-Label, auch als Funketikett bezeichnet). Das Detektionsmittel umfasst hierbei ferner eine an der Halterung oder benachbart zur Halterung angeordnete Sensoreinheit, die ausgebildet ist, die Markierung, z. B. das Etikett, zu erfassen, wenn sich der Radunterlegkeil in der Halterung befindet. Ist das Etikett ein RFID-Etikett, ist die Sensoreinrichtung entsprechend als ein RFID-Empfänger ausgeführt. Die Markierung oder das Etikett kann jedoch auch auf andere Weise ausgeführt sein, beispielsweise in Form eines Etiketts, das einen Strichcode oder einen sogenannten QR-Code aufweist, der von einer im Bereich der Halterung angeordneten optischen Empfängereinheit optisch bzw. opto-elektronisch erfasst wird.

Eine weitere Variante einer erfindungsgemäßen Realisierung eines derartigen Detektionsmittels sieht hierbei vor, dass die Übertragungsmittel eine in der Halterung angeordnete erste Spule und eine im Radunterlegkeil angeordnete zweite Spule aufweisen, mit deren Hilfe ein elektrisches Signal durch induktive Übertragung zwischen Radunterlegkeil und Halterung übertragen werden kann, wobei die erste Spule mit einer entsprechenden Leseelektronik zusammengeschaltet ist. Derartige induktive Übertragungssysteme sind beispielsweise im Kraftfahrzeugbereich von entsprechend ausgeführten Zündschlüsseln bekannt. Ein Vorteil dieser Variante ist, dass diese einerseits kostengünstig realisiert werden kann und ferner keine außen am Radunterlegkeil befindlichen Teile des Detektionsmittels erfordert, die beim Gebrauch leicht beschädigt werden könnten.

Gemäß einer weiteren Ausführungsform der Erfindung kann der Radunterlegkeil eine mechanische Kodierung für ein Zusammenwirken mit einer mechanischen Gegenkodierung in der Halterung aufweisen. Auf diese Weise kann sichergestellt werden, dass ein bestimmter Radunterlegkeil nur in einer bestimmten, ihm zugeordneten Halterung ordnungsgemäß angebracht werden kann. Auf diese Weise kann ein Diebstahlschutz realisiert werden, da ein entwendeter Radunterlegkeil in der Regel für den Entwender wertlos ist, da er in keine andere Halterung passt.

Eine derartige mechanische Kodierung des Radunterlegkeils kann beispielsweise dadurch realisiert werden, dass der Radunterlegkeil in einem Bereich seiner Außenfläche in einem vorbestimmten Muster angeordnete Vertiefungen und/oder Vorsprünge aufweist, die formschlüssig in ein entsprechendes Gegenmuster an der Halterung passen, analog zu einem mechanischen Schlüssel-Schloss-System.

Gemäß einer weiteren Ausführungsform kann das Detektionsmittel ferner eine in den Radunterlegkeil integrierte Bluetooth- oder Nahfeldkommunikation (englisch: NFC - Near Field Communication)-Sende-/Empfangseinheit aufweisen. Diese Sende-/Empfangseinheit kann in Kommunikationsverbindung mit einer entsprechenden Bluetooth- oder Nahfeldkommunikation-Sende-/Empfangseinheit des Kraftfahrzeugs oder eines Mobilfunkgeräts, insbesondere eines Smartphones stehen. Bei dieser Ausführungsform ist der Unterlegkeil somit mit einer entsprechenden Kommunikationseinheit des Fahrzeugs oder mit einem Mobiltelefon gepaart. Grundsätzlich kann der Unterlegkeil gemäß einer weiteren Ausführungsvariante mit einer SIM-Karte ausgestattet sein und auf diese Weise ebenfalls eine Sende-/Empfangseinheit eines Detektionsmittel ausbilden.

Zur Versorgung einer in den Radunterlegkeil integrierten Sende-/Empfangseinheit kann der Unterlegkeil auch eine wiederaufladbare Batterie aufweisen, die im Innern des Radunterlegkeils angeordnet ist und deren Aufladung entweder über Kontakte oder drahtlos, wie beispielsweise bei elektrischen Zahnbürsten, erfolgt.

Gemäß einem weiteren Aspekt der Erfindung kann das Kraftfahrzeug ferner eine optische bzw. visuelle und/oder akustische Warneinrichtung aufweisen, die ausgebildet ist, einen Zustand "Radunterlegkeil befindet sich im Halter" und/oder den Zustand "Radunterlegkeil befindet sich nicht im Halter" am Fahrerarbeitsplatz zu signalisieren. Das Kraftfahrzeug, insbesondere die Warneinrichtung kann hierbei ausgeführt sein, einen optischen bzw. visuellen und/oder akustischen Warnhinweis auszugeben, falls das Detektionsmittel erkennt, dass sich der Radunterlegkeil nicht in der Halterung befindet. Insbesondere kann in einem Anzeigedisplay des Kraftfahrzeug-Cockpits ein solcher Warnhinweis angezeigt werden. Somit erkennt der Fahrer sofort, warum die Wegfahrsperre aktiviert ist.

Weitere Einzelheiten und Vorteile der Erfindung werden im Folgenden unter Bezug auf die beigefügten Zeichnungen beschrieben. Es zeigen:
- Figur 1: eine stark schematisierte Ansicht eines Kraftfahrzeugs mit Radunterlegkeil und Halterung gemäß einer ersten Ausführungsform der Erfindung;
- Figur 2: eine stark schematisierte Ansicht eines Radunterlegkeils und seiner Halterung gemäß einer weiteren Ausführungsform;
- Figur 3: eine stark schematisierte Ansicht eines Radunterlegkeils und seiner Halterung gemäß einer weiteren Ausführungsform; und
- Figur 4: eine stark schematisierte Ansicht eines Radunterlegkeils und seiner Halterung gemäß einer weiteren Ausführungsform der Erfindung.

Gleiche oder funktional äquivalente Elemente sind in allen Figuren mit denselben Bezugszeichen bezeichnet.

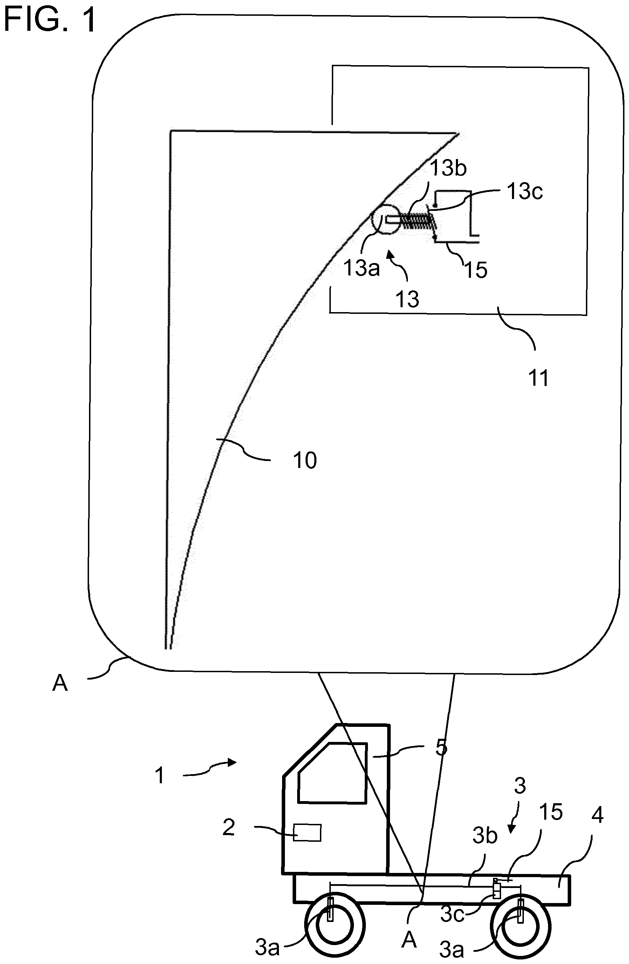

In Figur 1 ist zunächst im unteren Teil der Figur ein Nutzfahrzeug 1 gezeigt, aufweisend ein Fahrerhaus 5, das auf dem Fahrzeugrahmen 4 mittels einer Fahrerhauslagerung (nicht dargestellt) gelagert ist. Das Nutzfahrzeug 1 umfasst eine an sich bekannte Feststellbremse 3, mit pneumatischen Federspeicherbremszylindern 3a, die zum Einlegen der Feststellbremse entlüftet werden können und dadurch zugespannt werden. Die Federspeicherbremszylinder sind über Pneumatikleitungen 3b und eine mit einem Druckluftspeicher verbundene Ventilanordnung (jeweils nicht dargestellt) mit Druckluft beaufschlagbar.

Am Fahrzeugrahmen 4 oder an einer anderen geeigneten Stelle des Nutzfahrzeugs ist eine Halterung 11 für einen Radunterlegkeil 10 vorgesehen. Es wurde eingangs bereits erwähnt, dass aus dem Stand der Technik verschiedene Möglichkeiten bekannt sind, einen Radunterlegkeil im Kraftfahrzeug zu haltern. Der obere Teil der Figur 1 zeigt einen vergrößerten Ausschnitt A der Halterung 11 mit dem Radunterlegkeil 10. Die Halterung 11 ist hierbei stark schematisiert dargestellt. Die Halterung 11 kann je nach verfügbarem Bauraum zweckmäßig ausgeführt sein, beispielsweise als Stauraum, als Haltebügel, als Klemmvorrichtung, als Einschubfach etc.

Entscheidend gemäß der in Figur 1 dargestellten Variante ist, dass die Halterung 11 für den Radunterlegkeil 10 einen mechanischen als Rollenschalter 13 ausgeführten Druckschalter aufweist, der so an der Halterung 11 angeordnet ist, dass der Rollenschalter 13 automatisch dann betätigt wird, wenn der Radunterlegkeil 10 wieder mittels der Halterung 11 am Fahrzeug befestigt wird. Zum Einstecken in die Halterung 11 wird der Unterlegkeil 10 beispielsweise so auf den Rollenschalter 13 gedrückt, dass die Rolle 13a des Rollenschalters 13 von dem Unterlegkeil 10 in Figur 1 nach rechts gedrückt wird, so dass die Feder 13b zusammengedrückt wird und sich der Kontakt 13c des Rollenschalters schließt. Dadurch wird über die Anschlussleitungen 15 des Rollenschalters 13 ein entsprechendes elektrisches Signal erzeugt, wodurch eine Feststellbremsfunktion deaktiviert wird. Wird der Radunterlegkeil 10 aus der Halterung 11 entnommen, bewegt sich die Rolle 13a aufgrund der Federkraft der vorgespannten Feder 13b nach links und der Kontakt 13c ist geöffnet. Bei geöffnetem Kontakt 13c bzw. nichtbetätigtem Rollenschalter 13 wird über die Signalleitungen 15 kein elektrisches Signal übertragen, wodurch die Feststellbremsfunktion aktiviert wird.

Das Signal des Rollenschalters 13 kann beispielsweise über den Fahrzeug-Datenbus (CAN) an eine elektropneumatische Feststellbremse übertragen werden, die dann entsprechend eingelegt wird, falls der Rollenschalter 13 geöffnet ist, und deaktiviert wird, falls der Rollenschalter 13 geschlossen ist. Insbesondere kann über den Schalter 13 ein Magnetventil 3c der Feststellbremse 3 des Fahrzeugs betätigt werden, derart, dass beim geöffneten Schalter 13, d. h. der Radunterlegkeil 10 befindet sich nicht der Halterung 11, die Feststellbremsen 3a über das Magnetventil 3c entlüftet und damit zugespannt werden.

Der Rollenschalter 13 dient somit als ein konstruktiv einfach zu realisierendes Detektionsmittel, das ausgebildet ist, zu erkennen, ob sich der Radunterlegkeil 10 in der Halterung 11 befindet oder nicht und die Wegfahrsperre in Form der Feststellbremse 3 zu aktivieren, wenn sich der Radunterlegkeil 10 nicht in der Halterung 11 befindet und die Wegfahrsperre zu deaktivieren, wenn sich der Radunterlegkeil 10 in der Halterung 11 befindet.

Der Druckschalter 13 kann bei Bedarf, z. B. bei gestohlenem Unterlegkeil, auch mit einem Blindkeil oder auch nur mit einem Klebeband überbrückt werden, d. h. auch ohne Radunterlegkeil 10 betätigt werden.

Das Nutzfahrzeug 1 kann alternativ oder zusätzlich auch eine elektronische Wegfahrsperre 2 aufweisen, die in Abhängigkeit von dem Schalter 13 ausgegebenen Signal aktivierbar oder deaktivierbar ausgeführt sein kann.

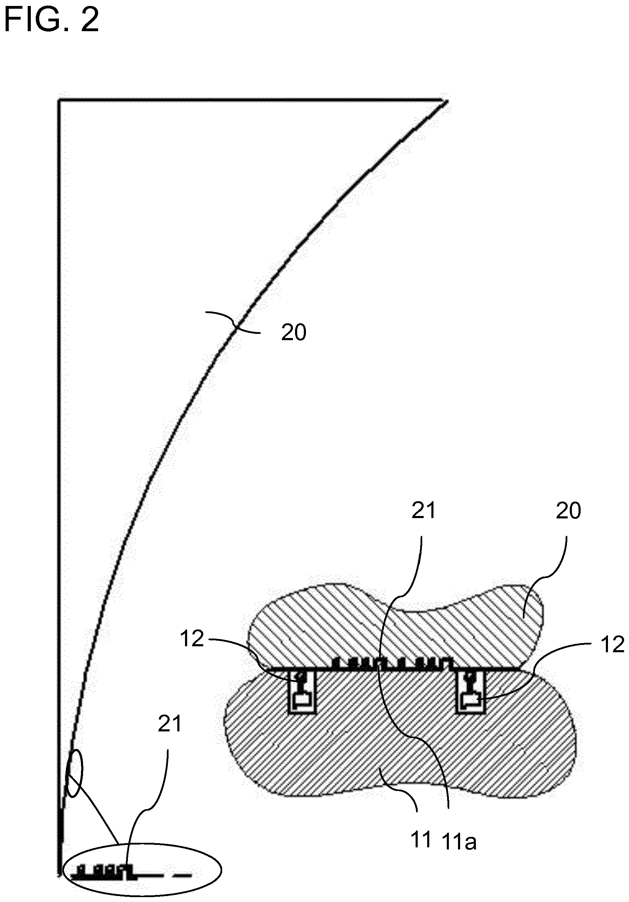

In Figur 2 ist eine weitere Variante der in Figur 1 gezeigten Ausführungsform gezeigt. Eine Besonderheit der in Figur 2 gezeigten Ausführungsvariante besteht darin, dass der Unterlegkeil 20 im Unterschied zu dem Unterlegkeil 10 ferner an einem Bereich seiner Außenfläche eine mechanische Kodierung 21 aufweist, die für ein Zusammenwirken mit einer mechanischen Gegenkodierung 11a der Halterung 11 ausgeführt ist. Der Bereich des Unterlegkeils mit der mechanischen Kodierung 21 ist durch den ellipsenförmigen Ausschnitt nochmals in einer vergrößerten Darstellung gezeigt. Ferner ist rechts in Figur 2 ein vergrößerter Ausschnitt gezeigt, der jeweils nur den Teilbereich des Radunterlegkeils 20 und den korrespondierenden Teilbereich 11 der Halterung zeigt, an denen sich die mechanische Kodierung 21 des Radunterlegkeils 20 bzw. die mechanische Gegenkontierung 11a der Halterung 11 befindet. Die mechanische Kodierung 21 des Radunterlegkeils ist durch ein Muster angeordneter Vertiefungen ausgebildet, in das ein entsprechend ausgebildetes Muster von Vorsprüngen der Gegenkodierung 11a der Halterung 11 formschlüssig eingreifen kann.

Es ist erkennbar, dass durch die mechanische Kodierung 21 des Radunterlegkeils 20 und die mechanische Gegenkontierung 11a der Halterung 11 somit eine Paarung zwischen dem Radunterlegkeil 20 und der Halterung 11 erzeugt wird, so dass nur jeweils der Radunterlegkeil 20 an der Halterung 11 befestigt werden kann, der genau die mechanische Kodierung 21 aufweist, die zu der mechanischen Gegenkodierung 11a passt. Nur in diesem Fall werden die Rollenschalter 13 entsprechend betätigt.

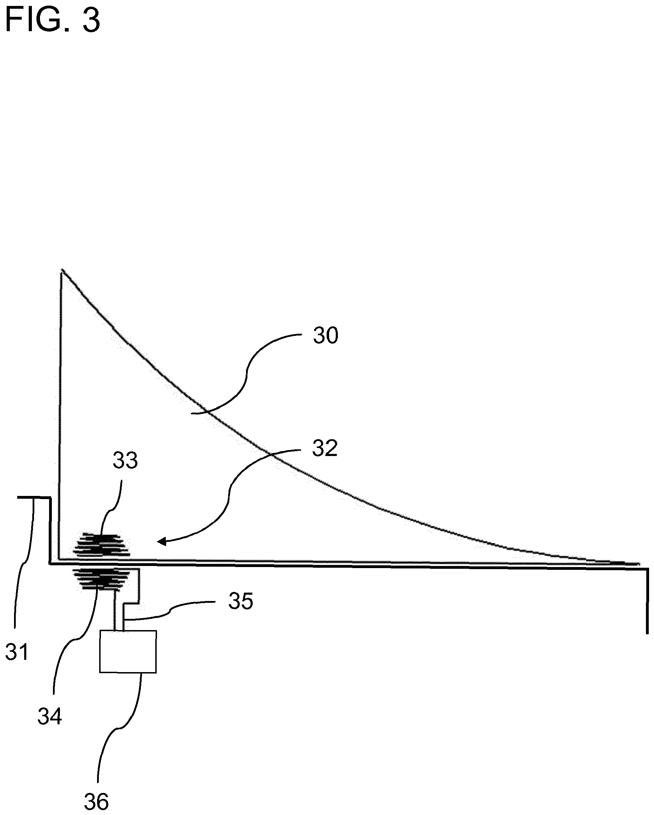

Figur 3 zeigt eine weitere Ausführungsform eines Detektionsmittels 32, um zu erkennen, ob sich ein Unterlegkeil 30 in der ihm zugeordneten Halterung 31 befindet. Die Besonderheit dieser Ausführungsvariante besteht darin, dass in der Halterung 31 eine erste Spule 34 angeordnet ist und dass ferner eine im Innern des Radunterlegkeils 30 angeordnete zweite Spule 33 vorgesehen ist. Mithilfe der ersten Spule 34 und der zweiten Spule 33 kann ein elektrisches Signal durch induktive Übertragung zwischen den Spulen 33, 34 und damit zwischen dem Radunterlegkeil 30 und der Halterung 31 übertragen werden, wobei die erste Spule 34 mit einer entsprechenden Leseelektronik 36 zusammengeschaltet ist.

Befindet sich nun der Radunterlegkeil 30 in seiner Halterungsposition in der Halterung 31, dann wird diese Anwesenheit des Randunterlegkeils 30 durch die entsprechende Anwesenheit der Spule 33 durch die Spule 34 detektiert, die ein entsprechendes Signal an die Auswerteelektronik 36 gibt. Die Auswerteelektronik 36 kann dann wieder ein entsprechendes Signal zur Aktivierung oder Deaktivierung der Wegfahrsperre an den Fahrzeug-Datenbus ausgeben. Zur Energieversorgung der ersten Spule 33 kann eine kleine wiederaufladbare Batterie im Radunterlegkeil 30 vorgesehen sein.

Die erste Spule 34 kann auch die Sendespule und die zweite Spule die Lesespule sein, so dass keine Batterie im Radunterlegkeil 30 zur Versorgung der zweiten Spule 33 erforderlich ist.

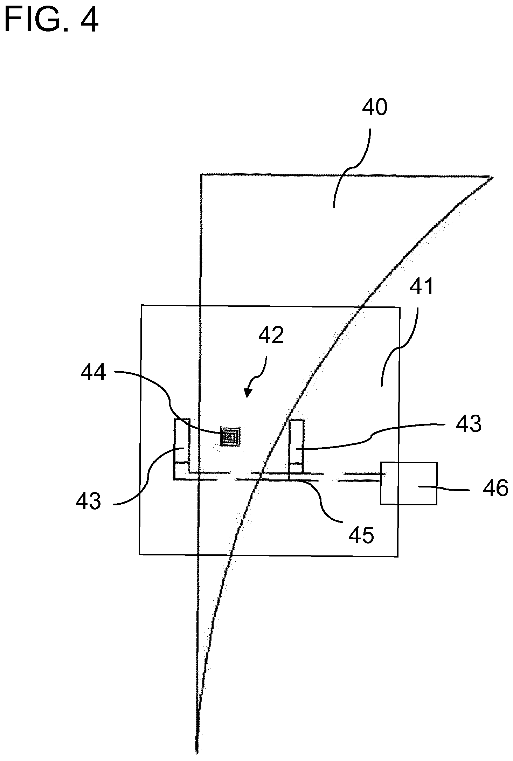

In Figur 4 ist eine weitere Ausführungsvariante gezeigt. Die Besonderheit dieser Ausführungsvariante liegt darin, dass das Detektionsmittel 42 zum Erkennen, ob sich der Radunterlegkeil 40 in seiner Halterung 41 befindet oder nicht, durch eine am Radunterlegkeil 40 vorgesehene Markierung 44 und eine Sensorvorrichtung 43, 45, 46 an der Halterung 41 gebildet wird, wobei die Sensorvorrichtung ausgeführt ist, die Markierung zu detektieren. Das Etikett kann z. B. ein an der Außenseite des Radunterlegkeils 41 befestigtes RFID-Etikett 44 sein. Die Halterung 41 für den Radunterlegkeil 40 weist entsprechend eine Sensorvorrichtung 43 auf, die ausgebildet ist, das RFID-Etikett 44 auszulesen. Befindet sich nun der Radunterlegkeil 40 in seiner vorbestimmten Stellung in der Halterung 41, kann die Sensoreinrichtung 43 das Etikett 44 detektieren und dessen Inhalt auslesen. Das Ausleseergebnis wird wiederum über Signalleitungen 45 an eine Auswerteelektronik 46 übertragen. Das Etikett 44 kann hierbei eine Kodierung aufweisen, die von der Sensorvorrichtung 43 erfasst werden kann und mit einer in ihrem Speicher abgelegten Kodierung verglichen wird. Die Kodierung kann beispielsweise den Radunterlegkeil eindeutig identifizieren, so dass auch hier eine Paarung von Unterlegkeil 40 mit der Halterung 41 ermöglicht werden kann.

Durch die vorstehend beschriebenen Detektionsmittel, z. B. den mechanischen, elektrischen, elektronischen oder optischen Detektionsmethoden, lassen sich Fahrzeug und Unterlegkeil paaren. Eine Paarung kann hierbei 1:1 erfolgen, d. h. ein (oder mehrere) Unterlegkeil(e) ist (oder sind) genau einem bestimmten Fahrzeug zugeordnet, so dass eine aktivierte Wegfahrsperre nur durch diesen (oder diese) Unterlegkeil(e) wieder deaktivierbar ist, durch Anbringen des Unterlegkeils (oder der Unterlegkeile) in der Halterung. Eine Paarung kann auch "mehrere zu mehrere" erfolgen, derart, dass ein Unterlegkeil mit einer Gruppe von Fahrzeugen innerhalb einer Fahrzeugflotte gepaart ist, vergleichbar mit Schlüsseln für Schließanlagen oder Zündschlüsseln für Linienbus-Flotten. Beispielsweise können 20 Unterlegkeile für 10 Zugfahrzeuge und 10 Anhänger, aber nicht für andere Fahrzeuge kodiert werden. Auch "Generalschlüssel", also ein Keil der für eine Fahrzeugflotte passt, sind möglich.

Die Erfindung ist nicht auf die oben beschriebenen bevorzugten Ausführungsformen beschränkt.

### Bezugszeichenliste

- 1: Nutzfahrzeug
- 2: Elektronische Wegfahrsperre
- 3: Pneumatische Feststellbremse
- 3a: Federspeicherbremszylinder
- 3b: Pneumatikleitungen
- 3c: Magnetventil
- 4: Fahrzeugrahmen
- 5: Fahrerhaus
- 10: Radunterlegkeil
- 11: Halterung
- 11a: Mechanische Gegenkodierung
- 13: Rollenschalter
- 13a: Druckrolle
- 13b: Federn
- 13c: Kontaktschalter
- 15: Signalleitung
- 20: Radunterlegkeil
- 21: Halterung
- 21a: Mechanische Kodierung
- 30: Radunterlegkeil
- 31: Halterung
- 32: Detektionsmittel
- 33: Spule
- 34: Spule
- 35: Signalleitung
- 36: Auswerteelektronik
- 40: Halterung
- 41: Halterung
- 42: Detektionsmittel
- 43: Sensorvorrichtung
- 44: Etikett
- 45: Signalleitung
- 46: Auswerteelektronik

## Patentansprüche

1. Kraftfahrzeug, insbesondere Nutzfahrzeug (1), umfassend
einen Radunterlegkeil (10; 20; 30; 40);
eine Halterung (11; 31; 41) für den Radunterlegkeil (10; 20; 30; 40), in der der Radunterlegkeil (10; 20; 30; 40) abnehmbar halterbar ist; und
eine Wegfahrsperre (2) des Kraftfahrzeugs, die aktiviert ist, wenn der Radunterlegkeil (10; 20; 30; 40) aus der Halterung (11; 31; 41) entnommen ist und deaktiviert ist, wenn der Radunterlegkeil (10; 20; 30; 40) sich in der Halterung (11; 31; 41) befindet, wobei die Wegfahrsperre (2) derart ausgebildet ist, dass bei aktivierter Wegfahrsperre (2)
a) eine Zündung und/oder ein Motorstart durchführbar ist und/oder eine elektrische Stromversorgung des Kraftfahrzeugs einschaltbar ist, jedoch ein Losfahren des Kraftfahrzeugs nicht möglich ist; und/oder
b) eine Feststellbremse (3) des Kraftfahrzeugs eingelegt ist.

2. Kraftfahrzeug nach Anspruch 1, **dadurch gekennzeichnet, dass** Überbrückungsmittel vorgesehen sind, mittels derer eine aktivierte Wegfahrsperre (2) deaktivierbar ist, ohne dass sich der Radunterlegkeil (10; 20; 30; 40) in der Halterung (11; 31; 41) befindet.

3. Kraftfahrzeug nach einem der vorhergehenden Ansprüche, **gekennzeichnet durch** ein Detektionsmittel (13; 32; 42), das ausgebildet ist,
a) zu erkennen, ob sich der Radunterlegkeil (10; 20; 30; 40) in der Halterung (11; 31; 41) befindet oder nicht; und
b) die Wegfahrsperre (2; 3) zu aktivieren, wenn sich der Radunterlegkeil (10; 20; 30; 40) nicht in der Halterung (11; 31; 41) befindet und die Wegfahrsperre (2) zu deaktivieren, wenn sich der Radunterlegkeil (10; 20; 30; 40) in der Halterung (11; 31; 41) befindet.

4. Kraftfahrzeug nach einem der vorhergehenden Ansprüche, **dadurch gekennzeichnet, dass** die Halterung (11; 31; 41) einen durch den Radunterlegkeil (10; 20; 30; 40) auslösbaren Kontakt oder Schalter (13) aufweist, über den die Wegfahrsperre (2) aktivierbar und deaktivierbar ist.

5. Kraftfahrzeug nach Anspruch 4, **dadurch gekennzeichnet, dass** über den Kontakt oder Schalter (13) ein elektrisches Signal erzeugbar ist, mittels dessen eine Wegfahrsperre (2) aktivierbar oder deaktivierbar ist.

6. Kraftfahrzeug nach Anspruch 4 oder 5, **dadurch gekennzeichnet, dass** der Kontakt oder Schalter (13) mit einem Ventil, insbesondere einem Magnetventil (3c), einer pneumatischen oder elektropneumatischen Feststellbremsvorrichtung (3) in Wirkverbindung steht, derart, dass ein nicht-ausgelöster Kontakt oder Schalter (13) eine Ventilstellung des Ventils erzeugt, in der die Feststellbremsvorrichtung (3) eingelegt ist.

7. Kraftfahrzeug nach einem der Ansprüche 4 bis 6, **dadurch gekennzeichnet, dass** der Schalter (13) als Druck- und/oder Rollenschalter ausgeführt ist, der so an der Halterung (11) angeordnet ist, dass der Druck- und/oder Rollenschalter in einem betätigten Zustand ist, wenn der Radunterlegkeil (10; 20) sich in der Halterung (11) befindet und in einem nichtbetätigten Zustand ist, wenn der Radunterlegkeil (10; 20) sich nicht in der Halterung (11) befindet.

8. Kraftfahrzeug nach Anspruch 3, **dadurch gekennzeichnet, dass** das Detektionsmittel (42)
a) eine auf dem Radunterlegkeil (40) angeordnete Markierung (44), insbesondere ein Etikett, aufweist, und
b) eine an der Halterung (41) oder benachbart zur Halterung angeordnete Sensoreinrichtung (43), die ausgebildet ist, die Markierung (44) zu erfassen, wenn sich der Radunterlegkeil (40) in der Halterung (41) befindet, aufweist.

9. Kraftfahrzeug nach Anspruch 8, **dadurch gekennzeichnet, dass** die Markierung eine Kodierung aufweist und dass die Sensoreinrichtung (43) ausgebildet ist, die erfasste Kodierung zu erfassen und mit einer in ihrem Speicher abgelegten Codierung zu vergleichen.

10. Kraftfahrzeug nach Anspruch 3, **dadurch gekennzeichnet, dass** das Detektionsmittel (32) Übertragungsmittel zur kontaktlosen Daten- und/oder Energieübertragung aufweist, mit deren Hilfe ein elektrisches Signal durch kontaktlose, insbesondere induktive Übertragung zwischen der Radunterlegkeil (30) und der Halterung (31) übertragen werden kann.

11. Kraftfahrzeug nach Anspruch 10, **dadurch gekennzeichnet, dass** die Übertragungsmittel (32) eine in der Halterung (31) angeordnete erste Spule (34) und eine im Radunterlegkeil (30) angeordnete zweite Spule (33) aufweisen, mit deren Hilfe ein elektrisches Signal durch induktive Übertragung zwischen Radunterlegkeil (30) und Halterung (31) übertragen werden kann, wobei die erste Spule (34) mit einer entsprechenden Leseelektronik (36) zusammengeschaltet ist.

12. Kraftfahrzeug nach einem der vorhergehenden Ansprüche, **gekennzeichnet durch** eine mechanische Kodierung (21) des Radunterlegkeils (20) für ein Zusammenwirken mit einer mechanischen Gegenkodierung (11a) der Halterung (11).

13. Kraftfahrzeug nach Anspruch 3 oder 11, **dadurch gekennzeichnet, dass** das Detektionsmittel (13; 32; 42) eine in den Radunterlegkeil integrierte Bluetooth- oder Nahfeldkommunikation (englisch: NFC - Near Field Communication) -Sende-/Empfangseinheit aufweist.

14. Kraftfahrzeug nach einem der Ansprüche 3 bis 13, **dadurch gekennzeichnet, dass** das Kraftfahrzeug ausgeführt ist, einen optischen und/oder akustischen Warnhinweis auszugeben, falls das Detektionsmittel (13; 32; 42) erkennt, dass sich der Radunterlegkeil (10; 20; 30; 40) nicht in der Halterung (11; 31; 41) befindet.

## Claims

1. A motor vehicle, in particular utility vehicle (1), comprising
a wheel chock (10; 20; 30; 40);
a securing means (11; 31; 41) for the wheel chock (10; 20; 30; 40) in which the wheel chock (10; 20; 30; 40) can be secured in a removable fashion; and
an immobilizer (2) of the motor vehicle, which is activated when the wheel chock (10; 20; 30; 40) is removed from the securing means (11; 31; 41) and is deactivated when the wheel chock (10; 20; 30; 40) is located in the securing means (11; 31; 41), wherein the immobilizer (2) is embodied in such a way that when the immobilizer (2) is activated
a) an ignition and/or an engine start can be carried out and/or an electrical power supply of the motor vehicle can be switched on but it is not possible for the motor vehicle to drive away; and/or
b) a parking brake (3) of the motor vehicle is engaged.

2. The motor vehicle according to Claim 1, **characterized in that** bypass means are provided by means of which an activated immobilizer (2) can be deactivated without the wheel chock (10; 20; 30; 40) being located in the securing means (11; 31; 41).

3. The motor vehicle according to one of the preceding claims, **characterized by** a detection means (13; 32; 42) which is designed
a) to detect whether or not the wheel chock (10; 20; 30; 40) is located in the securing means (11; 31; 41) and
b) to activate the immobilizer (2; 3) if the wheel chock (10; 20; 30; 40) is not located in the securing means (11; 31; 41) and to deactivate the immobilizer (2) if the wheel chock (10; 20; 30; 40) is located in the securing means (11; 31; 41).

4. The motor vehicle according to one of the preceding claims, **characterized in that** the securing means (11; 31; 41) has a contact or switch (13) which can be triggered by the wheel chock (10; 20; 30; 40) and by means of which the immobilizer (2) can be activated and deactivated.

5. The motor vehicle according to Claim 4, **characterized in that** an electrical signal can be generated by means of the contact or switch (13), by means of which electrical signal an immobilizer (2) can be activated or deactivated.

6. The motor vehicle according to Claim 4 or 5, **characterized in that** the contact or switch (13) is operatively connected to a valve, in particular a solenoid valve (3c), of a pneumatic or electropneumatic parking brake device (3) in such a way that a non-triggered contact or switch (13) generates a valve position of the valve in which the parking brake device (3) is engaged.

7. The motor vehicle according to one of Claims 4 to 6, **characterized in that** the switch (13) is embodied as a pressure switch and/or roller switch which is arranged on the securing means (11) in such a way that the pressure and/or roller switch is in an activated state if the wheel chock (10; 20) is located in the securing means (11), and is in a non-activated state if the wheel chock (10; 20) is not located in the securing means (11).

8. The motor vehicle according to Claim 3, **characterized in that** the detection means (42)
a) has a marker (44), in particular a label, which is arranged on the wheel chock (40), and
b) has a sensor device (43) which is arranged on the securing means (41) or adjacent to the securing means and is designed to sense the marker (44) if the wheel chock (40) is located in the securing means (41).

9. The motor vehicle according to Claim 8, **characterized in that** the marker has encoding, and **in that** the sensor device (43) is designed to sense the sensed encoding and compare it with encoding stored in the memory thereof.

10. The motor vehicle according to Claim 3, **characterized in that** the detection means (32) has transmission means for the contactless transmission of data and/or energy, by means of which an electrical signal can be transmitted between the wheel chock (30) and the securing means (31) by contactless, in particular inductive, transmission.

11. The motor vehicle according to Claim 10, **characterized in that** the transmission means (32) have a first coil (34) which is arranged in the securing means (31) and a second coil (33) which is arranged in the wheel chock (30), by means of which coils (34, 33) an electrical signal can be transmitted between the wheel chock (30) and securing means (31) by inductive transmission, wherein the first coil (34) is connected to a corresponding electronic reading device (36).

12. The motor vehicle according to one of the preceding claims, **characterized by** mechanical encoding (21) of the wheel chock (20) for interaction with opposite mechanical coding (11a) of the securing means (11).

13. The motor vehicle according to Claim 3 or 11, **characterized in that** the detection means (13; 32; 42) has a Bluetooth or near field communication transceiver unit integrated into the wheel chock.

14. The motor vehicle according to one of Claims 3 to 13, **characterized in that** the motor vehicle is designed to output a visual and/or acoustic warning message if the detection means (13; 32; 42) detects that the wheel chock (10; 20; 30; 40) is not located in the securing means (11; 31; 41).

## Revendications

1. Véhicule automobile, en particulier véhicule utilitaire (1), comprenant
un sabot d'arrêt de roue (10 ; 20 ; 30 ; 40) ;
un support (11 ; 31 ; 41) qui est destiné au sabot d'arrêt de roue (10 ; 20 ; 30 ; 40) et dans lequel le sabot d'arrêt de roue (10 ; 20 ; 30 ; 40) peut être maintenu de manière amovible ; et
un dispositif d'immobilisation (2) du véhicule automobile, lequel est activé lorsque le sabot d'arrêt de roue (10 ; 20 ; 30 ; 40) est retiré du support (11 ; 31 ; 41) et désactivé lorsque le sabot d'arrêt de roue (10 ; 20 ; 30 ; 40) est placé dans le support (11 ; 31 ; 41), le dispositif d'immobilisation (2) étant conçu de telle sorte que, lorsque le dispositif d'immobilisation (2) est activé,
a) un allumage et/ou un démarrage du moteur puissent être effectués et/ou une alimentation électrique du véhicule automobile puisse être activée, mais le roulement du véhicule automobile ne soit pas possible ; et/ou
b) un frein de stationnement (3) du véhicule automobile soit engagé.

2. Véhicule automobile selon la revendication 1, **caractérisé en ce que** des moyens de pontage sont prévus qui permettent de désactiver un dispositif d'immobilisation activé (2) sans que le sabot d'arrêt de roue (10 ; 20 ; 30 ; 40) ne se trouve dans le support (11 ; 31 ; 41).

3. Véhicule automobile selon l'une des revendications précédentes, **caractérisé par** un moyen de détection (13 ; 32 ; 42) qui est conçu
a) pour détecter si le sabot d'arrêt de roue (10 ; 20 ; 30 ; 40) se trouve ou non dans le support (11 ; 31 ; 41) ; et
b) pour activer le dispositif d'immobilisation (2 ; 3) lorsque le sabot d'arrêt de roue (10 ; 20 ; 30 ; 40) n'est pas dans le support (11 ; 31 ; 41) et pour désactiver le dispositif d'immobilisation (2) lorsque le sabot d'arrêt de roue (10 ; 20 ; 30 ; 40) se trouve dans le support (11 ; 31 ; 41).

4. Véhicule automobile selon l'une des revendications précédentes, **caractérisé en ce que** le support (11 ; 31 ; 41) comporte un contact ou un interrupteur (13) qui peut être déclenché par le sabot d'arrêt de roue (10 ; 20 ; 30 ; 40) et qui permet d'activer et de désactiver le dispositif d'immobilisation (2).

5. Véhicule automobile selon la revendication 4, **caractérisé en ce que** un signal électrique peut être généré par le biais du contact ou de l'interrupteur (13) qui permet d'activer ou de désactiver un dispositif d'immobilisation (2).

6. Véhicule automobile selon la revendication 4 ou 5, **caractérisé en ce que** le contact ou l'interrupteur (13) est en liaison avec une vanne, en particulier une électrovanne (3c), un dispositif de frein de stationnement pneumatique ou électropneumatique (3) de sorte qu'un contact ou un interrupteur (13) non déclenché génère une position de la vanne dans laquelle le dispositif de frein de stationnement (3) est engagé.

7. Véhicule automobile selon l'une des revendications 4 à 6, **caractérisé en ce que** l'interrupteur (13) est réalisé sous la forme d'un interrupteur à pression et/ou à rouleaux qui est disposé sur le support (11) de sorte que l'interrupteur à pression et/ou à rouleaux soit dans un état actionné lorsque le sabot d'arrêt de roue (10 ; 20) se trouve dans le support (11) et dans un état non actionné lorsque le sabot d'arrêt de roue (10 ; 20) ne se trouve pas dans le support (11).

8. Véhicule automobile selon la revendication 3, **caractérisé en ce que** les moyens de détection (42) comportent
a) un repère (44), notamment une étiquette, disposé sur le sabot d'arrêt de roue (40), et
b) un dispositif de détection (43) qui est disposé sur le support (41) ou à proximité du support et qui est conçu pour détecter le repère (44) lorsque le sabot d'arrêt de roue (40) se trouve dans le support (41).

9. Véhicule automobile selon la revendication 8, **caractérisé en ce que** le repère comporte un codage et **en ce que** le dispositif de détection (43) est conçu pour détecter le codage détecté et le comparer avec un codage stocké dans sa mémoire.

10. Véhicule automobile selon la revendication 3, **caractérisé en ce que** le moyen de détection (32) comporte des moyens de transmission destinés à transmettre des données et/ou de l'énergie sans contact et permettant de transmettre un signal électrique par transmission sans contact, notamment par induction, entre le sabot d'arrêt de roue (30) et le support (31).

11. Véhicule automobile selon la revendication 10, **caractérisé en ce que** les moyens de transmission (32) comportent une première bobine (34) disposée dans le support (31) et une deuxième bobine (33) disposée dans le sabot d'arrêt de roue (30), lesquelles permettent de transmettre un signal électrique par transmission par induction entre le sabot d'arrêt de roue (30) et le support (31), la première bobine (34) étant connectée avec une électronique de lecture correspondante (36).

12. Véhicule automobile selon l'une des revendications précédentes, **caractérisé par** un codage mécanique (21) du sabot d'arrêt de roue (20) pour coopérer avec un codage mécanique homologue (11a) du support (11).

13. Véhicule automobile selon la revendication 3 ou 11, **caractérisé en ce que** le moyen de détection (13 ; 32 ; 42) comporte une d'unité d'émission/de réception de communication Bluetooth ou en champ proche (en anglais : NFC - Near Field Communication) intégrée dans le sabot d'arrêt de roue.

14. Véhicule automobile selon l'une des revendications 3 à 13, **caractérisé en ce que** le véhicule automobile est conçu pour émettre un avertissement optique et/ou acoustique si le moyen de détection (13 ; 32 ; 42) détecte que le sabot d'arrêt de roue (10 ; 20 ; 30 ; 40) ne se trouve pas dans le support (11 ; 31 ; 41).
